(19) Europäisches Patentamt
European Patent Office
Office européen des brevets

(11) **EP 2 199 650 A1**

(12) **EUROPEAN PATENT APPLICATION**

(43) Date of publication:
23.06.2010 Bulletin 2010/25

(51) Int Cl.:
*F16L 9/12* (2006.01)
*C08L 23/08* (2006.01)
*B32B 27/32* (2006.01)
*C08F 210/16* (2006.01)
*B32B 1/08* (2006.01)

(21) Application number: 08022192.2

(22) Date of filing: 19.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Borealis AG
1220 Vienna (AT)

(72) Inventors:
• Harjuntausta, Jarmo
00630 Helsinki (FI)
• Äärilä, Jari
06100 Porvoo (FI)

(74) Representative: Kador & Partner
Corneliusstrasse 15
80469 München (DE)

(54) **Layer for pipes made of multimodal polyethylene composition**

(57)    The present invention relates to a pipe comprising a layer made of a multimodal polyethylene composition comprising a polyethylene base resin which comprises an ethylene copolymer (A) and an ethylene copolymer (B) wherein the ethylene copolymer (A) has a lower weight average molecular weight then the ethylene copolymer (B).

Figure 1

**Description**

The present invention relates to a pipe comprising a layer made of a multimodal polyethylene composition. Said layer can be used as the outermost layer of the pipe in order to protect said pipe against environmental stress cracking.

Pipes, which can be polymeric or metallic pipes, are commonly used for transporting heated and/or cooled substance e.g. water, gas, oil etc. However, these pipes are subjected to multiple influences, such as mechanical stress, either due to external forces or frozen-in stresses, different chemical environments - inside or outside of the pipe - and/or different temperatures. These influences may lead to premature failures of the pipe material in the form of cracks. Hence, in order to avoid these cracks, outer layers, e.g. jacketing or top-coating layers, are used in pipe applications.

One requirement of such layers is to show a good cold bending behaviour, but also to show a strong environmental stress cracking resistance. Furthermore, it is general knowledge that it is important that the pipe, in particular the outermost layer, is easy to process, e.g. to facilitate the extrusion. During extrusion, crack initiation points caused by e.g. gel formation, oxidised particles etc. can be generated. Therefore, it is desired to provide a pipe material which shows a good processability to avoid such crack initiation points.

Moreover, it is desired that the material should possess a low shrinkage rate to reduce frozen in stress creation during and after processing. Furthermore, a good abrasion resistance is also important to avoid crack initiation points and thus to obtain a pipe showing good environmental stress cracking resistance.

Polyethylene compositions are frequently used for the production of pipes due to their favourable physical and chemical properties such as e.g. mechanical strength, corrosion resistance and long-term stability.

However, it is difficult to provide a composition for pipes which excels in all of the above mentioned properties simultaneously

Therefore, the object of the present invention is to provide a layer for a pipe made of a polyolefin material with a good processability, while at the same time the layer made of the material is able to protect a pipe against environmental stress cracking.

The present invention is based on the finding that the above objects can be achieved if the layer is made of a multimodal polyethylene composition comprising a polyethylene base resin which comprises two different ethylene copolymers.

Therefore, the present invention provides a pipe comprising a layer made of a polyethylene composition comprising a polyethylene base resin, which comprises

    a. an ethylene copolymer (A) and

    b. an ethylene copolymer (B),

wherein ethylene copolymer (A) has a lower weight average molecular weight than ethylene copolymer (B), and the polyethylene base resin has a melt flow rate $MFR_2$ (2.16 kg/190°C) of 0.1 to 3.5 g/10min and a density of at least 0.915 g/cm$^3$.

As shown below, the multimodal polyethylene composition comprising such a polyethylene base resin manifests better cold bending behaviour and environment stress cracking resistance as well as abrasion resistance than conventional unimodal materials. Furthermore, the material shows easier processability in extrusion and lower shrinkage rates.

In the present invention the term molecular weight denotes the weight average molecular weight $M_w$. This property may either be used directly, or the melt flow rate (MFR) may be used as a measure for it.

The term "base resin" denotes the entirety of polymeric components in the polyethylene composition according to the invention. Preferably, the base resin is consisting of fractions (A) and (B), optionally further comprising a pre-polymer fraction in an amount of up to 20 wt%, preferably up to 10 wt%, more preferably up to 5 wt% of the total base resin.

The melt flow rate $MFR_2$ (2.16 kg/190 °C) of the polyethylene base resin is preferably from 0.2 to 3.0 g/10 min, more preferably from 0.3 to 2.5 g/10 min and most preferably from 0.3 to 1.5 g/10 min.

Additionally, the flow rate ratio $FRR_{21/2.16}$ of the polyethylene base resin is preferably between 30 to 135, more preferably between 35 to 120, even more preferably between 40 to 110 and most preferably between 50 to 90.

The density of the polyethylene base resin is at least 0.915 g/cm$^3$, preferably in a range of 0.915 g/cm$^3$ to 0.955 g/cm$^3$, more preferably in range of 0.915 to 0.940 g/cm$^3$ and most preferably in a range of 0.916 to 0.930 g/cm$^3$.

The melt flow rate $MFR_{2.16}$ (2.16 kg/190°C) of ethylene copolymer (A) is preferably in a range of 50 to 3000 g/10 min, more preferably in a range of 50 to 1000 g/10 min and even more preferred in a range of 200 to 600 g/10 min.

Furthermore it is preferred that the ethylene copolymer (A) has a density of 0.930 to 0.975 g/cm$^3$, more preferred of 0.935 to 0.955 g/cm$^3$.

The polyethylene base resin of the present invention further comprises an ethylene copolymer (B).

In the present invention the polyethylene copolymer (B) should have a density of 0.880 to 0.930 g/cm$^3$, preferably

of 0.895 to 0.925 g/cm$^3$, and a melt flow rate preferably of 0.01 to 0.8 g/ 10 min, preferably of 0.05 to 0.3 g/10 min.

The used comonomers of both ethylene copolymers may be equal or different.

As comonomers variation, alpha-olefins with $C_4$-$C_{20}$ carbon atoms may be used, but the comonomers are preferably a $C_4$-$C_{20}$ alkene, selected from the group of 1-butene, 1-pentene, 4-methyl-1-pentene, 1-hexene, 1-heptene, 1-octene, 1-decene and 1-icosene, in particular, the comonomers 1-butene and/or 1-hexene.

The amount of the comonomer used in ethylene polymer (A) is preferably between 0.1 to 10, more preferably between 0.5 to 6, even more preferably between 1 to 6, and most preferably between 2 to 6 mole%.

The amount of comonomer used in component (B) is preferably between 1 to 25, more preferably between 5 to 20, most preferably between 10 to 17 mole%.

The polyethylene base resin of the polyethylene composition of the present invention comprises two different ethylene copolymers. Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The polyethylene base resin of the present invention may be and preferably is produced in a multistage process wherein e.g. ethylene polymers (A) and (B) are produced in subsequent stages. In such a case, the properties of the both polymers produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the copolymer is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the copolymer produced in higher stages of such a multistage process can be determined by applying either or both of the above methods. The skilled person will be able to select the appropriate method.

The polyethylene composition according to the invention preferably is produced so that at least one of ethylene copolymers (A) and (B), preferably (B), is produced in a gas-phase reaction.

Further preferred, one of the ethylene copolymers (A) and (B) of the polyethylene base resin, preferably (A), is produced in a slurry reaction, preferably in a loop reactor, and one of the ethylene copolymers (A) and (B), preferably (B), is produced in a gas-phase reaction.

Further, the polyethylene base resin preferably is an "in-situ"-blend. Such blends are preferably produced in a multistage process. However, an "insitu"-blend may also be produced in one reaction stage by using two or more different kinds of catalyst.

Accordingly, it is preferred that ethylene copolymers (A) and (B) of the polyethylene base resin are produced in different stages of a multistage process.

Preferably, the multistage process comprises at least one gas phase stage in which, preferably, ethylene copolymer (B) is produced.

Further preferred, ethylene copolymer (B) is produced in a subsequent stage in the presence of ethylene copolymer (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process are such as described in EP 517 868, i.e. the production of ethylene copolymers (A) and (B) is carried out as a combination of slurry polymerisation for ethylene copolymer (A)/gas-phase polymerisation for ethylene copolymer (B). The slurry polymerisation is preferably performed in a so-called loop reactor. Further preferred, the slurry polymerisation stage precedes the gas phase stage. The order of the stages may, however, also be reversed.

Optionally and advantageously, the main polymerisation stages may be preceded by a pre-polymerisation, in which case up to 20 % by weight, preferably 1 to 10 % by weight, more preferably 1 to 5 % by weight, of the total base resin is produced. The pre-polymer is preferably an ethylene polymer (HDPE). At the pre-polymerisation, preferably all of the catalyst is charged into a loop reactor and the pre-polymerisation is performed as a slurry polymerisation. Such a pre-polymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst.

The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

It is preferred that the multimodal base resin of the polyethylene composition according to the invention is a bimodal polyethylene mixture consisting of ethylene copolymers (A) and (B), optionally further comprising a small pre-polymerisation fraction in the amount as described above. It is also preferred that this multimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 75 to 110 °C, more preferably is 80 to 105°C, and most preferably is 82 to 100°C, and the temperature in the gas-phase reactor preferably is 65 to 105 °C, more preferably is 70 to 100°C, and most preferably is 72 to 97°C.

The composition preferably if produced in a process comprising a compounding step, wherein the composition of the base resin, i.e. the blend, which is typically obtained as a base resin powder from the reactor, is extruded in an extruder and then pelletised to polymer pellets in a manner known in the art.

The extruder may be e.g. any conventionally used compounding or extruder unit, preferably is a co-rotating or counter-rotating twin screw extruder, or an internal mixer such as a Banbury type mixer or a single screw extruder such as a Buss co-kneader or a conventional single screw extruder. Static mixers such as Kenics, Koch, etc. can also be used.

In the present invention the weight ratio between ethylene copolymer (A) and (B) in the polyethylene base resin is preferably 0.50 to 1 to about 1.5 : 1

Moreover, the polyethylene composition of the present invention may also comprise additives like processing agent adhesives, anti-oxidants, pigments, fillers, flame retardants and their like. It may also comprise carbon black up to 6 % or another UV stabilizer for better UV resistance and can be of natural colour or coloured during or before processing.

Preferably, in this extrusion step the additives or other polymer components can be added to the composition in the desired amount.

The polyethylene composition of the present invention preferably has a tensile strength of at least 28 MPa, more preferably of at least 30 MPa, most preferably of at least 35 MPa determined according to ISO 527. Usually, the measured upper limit of the tensile strength is 80 MPa.

The elongation at break of the polyethylene composition is preferably between 500 to 1200 %, more preferably between 550 to 1000 % and even more preferably between 600 to 900 % determined according to ISO 527.

Furthermore, the polyethylene composition preferably has a flexural modulus of at least 280 MPa, more preferably of at least 350 MPa determined according to ISO 178. However, it is preferred that the flexural modulus is lower than 500, more preferably lower than 450, and most preferably lower than 420 according to ISO 178.

The abrasion weight loss is preferably below 17.5 mg/1000 cycles, more preferably below 17.0 mg/1000 cycles according to ASTM D 4060 and the shrinkage after 24 h preferably is below 0.3 %, more preferably below 0.2% determined according to AEIC C S5-94.

Additionally, the slow crack propagation resistance of the polyethylene composition preferably is at 4 MPa at least 80 h, more preferably at least 200 h, even more preferably at least 500h, and most preferably at least 1000 h determined according to ISO 6252-1992 (e) and the heat deformation is preferably below 50%, more preferably below 30%, most preferably below 20% determined according to EN-60811-3-1. Usually, due to technical requirements of the measurement methods, the slow crack resistance of the polyethylene composition is at 4 MPa not higher than 8000 h according to ISO 6252-1992(e) and the heat deformation is not below 0.5% according to EN-60811-3-1.

The polyethylene composition according to the present invention is used for the manufacture of a layer of a pipe.

The layer of the invention is preferably used as the outermost layer of the pipe and has preferably a thickness from 0.05 mm to 20 mm.

The pipe of the invention comprises on or more layers made of the above described polyethylene composition and may be a steel or a polymeric pipe.

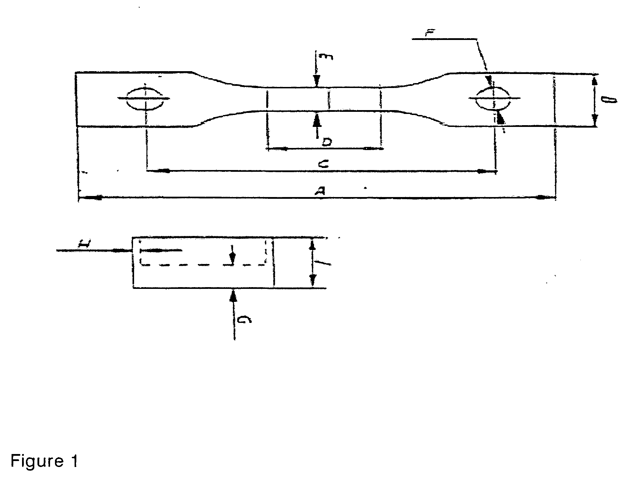

Figure 1: Graphical representation of a CTL-test; A: Total length; B: Width at ends, C: Centre distance between holders, D: Parallel length; E: Width of narrow parallel part; F: Hale diameter; G: Main notch; H: Side grooves; I: Thickness of plaque

Methods

*a. Melt flo w rate*

The melt flow rate is determined according to ISO 1133 and it is indicated in g/10min. The MFR is an indication of the flowability and thus the processability of the polymer. The higher the melt flow rate, the lower the viscosity of the polymer. The MFR of the ethylene polymers is measured with a load of 2.16 kg at 190°C.

*b. Density*

The density is measured according to ISO 1183, sample preparation is made according to ISO 187222B.

*c. Tensile test*

Tensile tests were performed according to ISO 527-3 using injection moulded specimen as described in EN ISO 1873-2 (dog bone shape, 3 mm thickness).
Tensile modulus (E-modulus) was also determined according to ISO 527-3 and calculated from the linear part of the tensile test results.

*d. Flexural Modulus*

The flexural modulus was measured according to ISO 178 on compression molded sample specimen.

*e. Abrasion resistance*

The Taber abrasion was measured according to ASTM D 4060.
The specimen is a 2 mm thick $100 \times 100$ mm$^2$ compression moulded plaque having a hole with 6.3 mm diameter at the centre. The specimen has been thermostated for at least 24 hours at 23 °C temperature and 50 % relative humidity. The test is done by using CS-17 abrasion wheel. The wheel is adjusted by placing the specimen in the device and running the wheel 50 cycles. The specimen is then carefully cleaned and weighed after which the specimen is placed in the testing device and the test is started. The wear index (I) is calculated as:

$$I = \frac{(A - B) \cdot 1000}{C}$$

A: weight of the specimen before the abrasion,

B: weight of the specimen after the abrasion and

C: number of abrasion cycles.

The adjustment of the wheel is done at the beginning of each test and after 500 cycles.

*f. Cold bend test*

The cold bend test is carried out according to EN 60811-1-4.

*g. Heat Deformation*

The heat deformation was measured according to EN 60811-3-1.

*h. Shrinkage*

The shrinkage was measured according to AEIC C S5-94

*i. CTL*

The slow crack growth resistance is determined according to ISO 6252-1992 (E).

The CTL test is a test for accelerated slow crack growth where the acceleration is maintained by elevated temperature of 60 °C. The testing is performed in a surface active solution and the incorporation of a notch both accelerates the time to failure and ensures a plain strain in the samples. The stress in these samples was varied between 4.0 MPa and 7.0 MPa (actual stress in the notched region). The surfactant used in this test was IGEPAL CO-730. An example of the dimensions of the test pieces can be seen below.

The samples are prepared by pressing a plaque (see Figure 1). The plaques are subsequently milled into the right dimensions in a fixture on two of the sides. A front notch of 2.5 mm depth is then cut into the sample with a razor blade fitted into a notching machine (N.BROWN design) the notching speed is 0.2 mm / min. On the two remaining sides, side grooves of 0.8 mm are cut. After making the notches, the sample is conditioned in 23 $\pm$ 1 °C and 50 % relative humidity for at least 48 h. The samples are then mounted in the test chamber in which the active solution is kept. The active solution is a 10 % water solution of IGEPAL CO-730 (chemical substance Nonyl phenyl polyethylene glycol ether).

The samples are loaded with a dead weight. At the moment of breakage an automatic timer is shut off.

A : Total length 125 to 130 mm

B : Width at ends 21 $\pm$ 0.5 mm

C : Centre distance between holders 90 mm

D : Parallel length 30 $\pm$ 0.5 mm

E : Width of narrow parallel part 9 $\pm$ 0.5 mm

F : Hale diameter 10 mm

G : Main notch 2.5 $\pm$ 0.02 mm

H : Side grooves 0.8mm

I : Thickness of plaque 6 $\pm$ 0.2mm

Examples

Example 1

As catalyst a normal silica based Ziegler-Natta (ZN) catalyst was used. Optionally, a MgCl$_2$ based ZN catalyst can be used. The catalyst was prepared according to Example 3 of EP 688794.

Polymerisation conditions:

| Prepolymeriser | | |
|---|---|---|
| Temp | °C | 70 |
| Catalyst feed | g/h | 4 |

(continued)

| Prepolymeriser | | |
|---|---|---|
| H2/C3 | g/kg | 0.1 |
| C4/C2 | g/kg | 40 |
| Loop reactor | | |
| Temp | °C | 85 |
| H2/C2 | mol/kmol | 315 |
| C4/C2 | mol/kmol | 720 |
| $MFR_2$ | g/10 min | 345 |
| Density | $kg/m^3$ | 948 |
| Gas phase reactor | | |
| Temp | °C | 75 |
| H2/C2 | mol/kmol | 29 |
| C4/C2 | mol /kmol | 685 |
| Split | Prepoly/loop/GPR | 1/45/54 |

Comparative Example 1

The composition which is used in the comparative example 1 is a mechanical blend of 85 wt% of a linear low density polyethylene and 15 wt% of low density polyethylene.

Pelletising

Pelletising was carried out with JSW extruder using 21-25 t/h feed rate and 280 rpm, resulting in SEI=175 kWh/t and melt temperature of 235 ᵒC. Additives: A0502 3000 ppm, AS100 1000 ppm and black masterbatch 6.6 wt-%

| Properties | Comparative example 1 | Example 1 |
|---|---|---|
| $MFR_{2.16}$ [g/10 min] | 0.70 | 0.97 |
| $FRR_{21}/_{2.16}$ | | 76 |
| Density [$kg/dm^3$] | 0.933 | 0.937 |
| Tensile strength [MPa] | 25,9 | 34,8 |
| Elongation at break [%] | 958,3 | 886,8 |
| Flexural modulus [MPa] | 276 | 395 |
| Abrasion weight loss [mg/1000cycles] | 17,5 | 16,8 |
| Cold bend | pass | pass |
| Heat deformation [%] | 73,7 | 15,2 |
| Shrinkage after 24h | 0,40% | 0,18% |
| Slow crack growth, CTL, 4MPa, notched according to ASTM F 1473 | 8h | >1000h |

**Claims**

1. A pipe comprising a layer made of a polyethylene composition comprising a polyethylene base resin, which comprises

    a. an ethylene copolymer (A) and

b. an ethylene copolymer (B),

wherein ethylene copolymer (A) has a lower weight average molecular weight than the ethylene copolymer (B), and the polyethylene base resin has a melt flow rate $MFR_2$ (2.16 kg/190°C) of 0.1 to 3.5 g/10min and a density of at least 0.915 g/cm$^3$.

2.  A pipe according to claim 1, wherein the ethylene copolymer (A) has a density of 0.930 to 0.970 g/cm$^3$.

3.  A pipe according to claims 1 or 2, wherein the ethylene copolymer (B) has a density of 0.880 to 0.930 g/cm$^3$.

4.  A pipe according to any one of the preceding claims, wherein ethylene copolymer (A) is produced in a catalytic supported polymerisation.

5.  A pipe according to any one of the preceding claims, wherein the polyethylene composition has a slow rack propagation resistance of at least 80 h at 4 MPa according to ISO 6252-1992 (E).

6.  A pipe according to any one of the preceding claims, wherein the polyethylene composition has an abrasion weight loss of less than 17.5 mg/1000 cycles according to ASTM D 4060

7.  A pipe according to any one of the preceding claims, wherein the polyethylene composition has a tensile strength of at least 30 MPa according to ISO 527.

8.  A pipe according to any one of the preceding claims, wherein said layer is the outermost layer of the pipe.

9.  Use of a polyethylene composition comprising a polyethylene base resin which comprises

    a. an ethylene copolymer (A) and
    b. an ethylene copolymer (B),

    wherein ethylene copolymer (A) has a lower weight average molecular weight than the ethylene copolymer (B), and the polyethylene base resin has a melt flow rate $MFR_2$ (2.16 kg/190°C) of 0.2 to 3.5 g/10min and a density of at least 0.915 g/cm$^3$ for the manufacture of a layer of a pipe.

10. Use of a polyethylene composition according to claim 9, wherein said layer is the outermost layer of the pipe.

Figure 1

Europäisches
Patentamt

European
Patent Office

Office européen
des brevets

**EUROPEAN SEARCH REPORT**

Application Number

EP 08 02 2192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/288443 A1 (MAVRIDIS HARILAOS [US] ET AL) 29 December 2005 (2005-12-29) * paragraphs [0001], [0009] - [0014], [0018], [0019], [0021], [0022] * * claims 1,4,5,9,10 * | 1-10 | INV. F16L9/12 C08F210/16 C08L23/08 B32B1/08 B32B27/32 |
| X | US 5 908 679 A (BERTHOLD JOACHIM [DE] ET AL) 1 June 1999 (1999-06-01) * column 1, line 51 - line 60 * * column 7, line 30 - line 41 * * table 2 * * claims 1,3-5 * | 1-10 | |
| X | EP 0 989 140 A (FINA RESEARCH [BE]) 29 March 2000 (2000-03-29) * paragraphs [0001], [0010], [0011], [0014], [0018], [0048], [0087] - [0089], [0093] * * claim 1 * | 1-10 | |
| X | EP 1 942 135 A (BOREALIS TECH OY [FI]) 9 July 2008 (2008-07-09) * paragraphs [0001], [0034] - [0045] * * claims 1,7-9,11,12 * | 1-10 | TECHNICAL FIELDS SEARCHED (IPC) C08F C08L F16L |
| X | EP 1 764 389 A (BOREALIS TECH OY [FI]) 21 March 2007 (2007-03-21) * paragraphs [0001], [0017], [0029] - [0037], [0062] - [0076] * * claims 1,17 * | 1-10 | |

The present search report has been drawn up for all claims

| Place of search | Date of completion of the search | Examiner |
|---|---|---|
| The Hague | 27 April 2009 | Girard, Sarah |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 02 2192

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2009

| Patent document cited in search report | | Publication date | Patent family member(s) | | Publication date |
|---|---|---|---|---|---|
| US 2005288443 | A1 | 29-12-2005 | CA | 2570136 A1 | 19-01-2006 |
| | | | CN | 1972972 A | 30-05-2007 |
| | | | EP | 1776397 A1 | 25-04-2007 |
| | | | JP | 2008505202 T | 21-02-2008 |
| | | | KR | 20070036082 A | 02-04-2007 |
| | | | WO | 2006007014 A1 | 19-01-2006 |
| US 5908679 | A | 01-06-1999 | NONE | | |
| EP 0989140 | A | 29-03-2000 | NONE | | |
| EP 1942135 | A | 09-07-2008 | WO | 2008080459 A1 | 10-07-2008 |
| EP 1764389 | A | 21-03-2007 | AT | 396230 T | 15-06-2008 |
| | | | AU | 2006291748 A1 | 22-03-2007 |
| | | | CA | 2618810 A1 | 22-03-2007 |
| | | | CN | 101263193 A | 10-09-2008 |
| | | | WO | 2007031155 A1 | 22-03-2007 |
| | | | ES | 2303164 T3 | 01-08-2008 |
| | | | KR | 20080031491 A | 08-04-2008 |
| | | | US | 2008233322 A1 | 25-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 517868 A
- EP 688794 A

**Non-patent literature cited in the description**

- **B. Hagström.** *Conference on Polymer Processing (The Polymer Processing Society), Extended Abstracts and Final Programme,* 19 August 1997, vol. 4, 13